# EUROPEAN PATENT APPLICATION

(11) **EP 2 500 181 A1**
(43) Date of publication of application: **19.09.2012**
(21) Application number: 11168271.2
(22) Date of filing: 31.05.2011
(51) Int. Cl.: B60B 21/06

(54) **Rim with recesses for connecting spokes**

(30) Priority: 16.03.2011 TW 100204695
(71) Applicant: Kunshan Henry Metal Technology Co., Ltd., Jiangsu 215300 (CN)
(72) Inventor: Tho, Kee Ping, Kunshan Jiangsu (CN)
(74) Representative: Chaillot, Geneviève

(57) **Abstract**

A rim includes a first connection bridge, a second connection bridge and two walls connected to two sides of the first and second connection bridges. Multiple through holes are defined through the second connection bridge and multiple seats are defined in the first connection bridge and located corresponding to the through holes. Each seat has a recess facing the second connection bridge and an installation hole is defined through each of the seats. Multiple engaging members each have a passage and are respectively engaged with the installation holes. Each of the engaging members is matched with the recess and has a contact surface so that the head of the spoke is securely connected to contact surface. The connection between the spokes and the rim dispenses stress to the engaging members.

## Description

### FIELD OF THE INVENTION

The present invention relates to a rim, and more particularly, to a rim having recesses defined in the connection bridge and engaging members are located in the recesses to be connected with the spokes.

### BACKGROUND OF THE INVENTION

A conventional wheel generally includes a rim, a hub located at the center of the rim and the spokes connected between the rim and the hub. The rim is made by Aluminum Alloy and extruded to a straight strip which is cut and the two ends are connected to each other to form a circular rim. The rim includes a top connection bridge and a bottom connection bridge and two walls extend from two sides of the two connection bridges. The tire is engage to the walls and multiple installation holes are defined through the two connection bridges so as to be connected with the spokes.

When the rim is in operation or the tension of the spokes needs to be adjusted, the spokes pull the rim at the connection portions which are easily broken so that the strength of the rim is one of the concerns of the manufacturers who make the rim.

Taiwan Utility Model Patent No. 094201235 discloses a first tube which is connected with the threads of the head of the spoke and includes a flange which is engaged with the rim. A first hole is defined in the first tube. A second tube having a second hole extends from the first end of the first tube and the diameter of the second tube is smaller than that of the flange. The first and second holes are in communication with each other, and the second end of the second hole communicates with outside of the second tube so that the head of the spoke extends therein. An extension tube having a third hole extends from the second end of the flange, the third hole communicates with the first hole and includes inner threads which are threadedly connected to the threads of the head of the spoke.

Taiwan Utility Model Patent No. 094203977 discloses a rim having multiple sections which have protrusion which is defined by a first inclined surface and a second inclined surface. The adjacent holes are defined through the adjacent inclined surfaces so that the spokes go across the adjacent spokes. A protrusion portion is formed between the adjacent holes so that the thickness of the positions that the spokes are connected is increased and the strength is increased.

The first example includes a larger flange to be engaged with the rim and the first tube is connected with a second tube so as to be connected with the spokes. The flange is connected to the extension tube so as to be threadedly connected to the threads of the head of the spoke. The flange reinforces the strength of the area between the spokes and the rim. The second example includes a protrusion portion to increase the thickness of the rim to reinforce the structural strength of the rim.

However, the rim is not reinforced at the portions where the holes are defined. Although the tube has a larger flange, the position where the hole is defined can also be broken when the spokes are applied by a significant tension. The second example has reinforcement structure and thickness to the rim, but the weight of the rim increases.

The present invention intends to provide a rim with reinforced structure so as to firmly connect with the spokes.

### SUMMARY OF THE INVENTION

The present invention relates to a rim and comprises a first connection bridge and a second connection bridge, and two walls are connected to two sides of the first and second connection bridges. The first connection bridge is located closer than the second connection bridge to the center of the rim. Multiple through holes are defined through the second connection bridge. Multiple seats are defined in the first connection bridge and located corresponding to the through holes in the second connection bridge. Each seat has a recess facing the second connection bridge and a protrusion is located in opposite to the second connection bridge. An installation hole is defined through each of the seats. Multiple engaging members each have a passage and each installation hole has one engaging member engaged therewith. Each of the engaging members is matched with the recess. A contact surface is defined in each of the engaging members and matched with the neck portion of the head of the spoke.

An object of the invention is therefore a rim comprising:
a first connection bridge and a second connection bridge, two walls connected to two sides of the first and second connection bridges, the first connection bridge located closer than the second connection bridge to a center of the rim, multiple through holes defined through the second connection bridge;
multiple seats defined in the first connection bridge and located corresponding to the through holes in the second connection bridge, each seat having a recess facing the second connection bridge and a protrusion located in opposite to the second connection bridge, an installation hole defined through each of the seats, and
multiple engaging members each having a passage and each installation hole having one engaging member engaged therewith, each of the engaging members being matched with the recess, a contact surface defined in each of the engaging members and matched with a neck portion of a head of a spoke.

The primary object of the present invention is to provide a rim wherein the connection bridge has multiple seats and each seat has an engaging member engaged with the installation hole in each seat. The engaging member has a passage so as to connect the spoke. The connection between the spokes and the rim dispenses stress to the engaging members.

Another object of the present invention is to provide a rim wherein the engaging member has a contact surface which is matched with the curvature of the recess of the seat and the neck portion of the head of the spoke so that the stress is transferred to the engaging member to reduce the stress applied to the rim.

Yet another object of the present invention is to provide a rim wherein the engaging member indirectly reinforces the strength of the installation hole and reduces the thickness of the rim so obtain a light rim.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show a part of the rim and the engaging member of the present invention;
Fig. 2 is an end cross sectional view of the rim of the present invention;
Fig. 3 is an end cross sectional view of the rim and the engaging member in the rim of the present invention;
Fig. 4 is an end cross sectional view of the rim and the engaging member, and the spoke is connected to the engaging member;
Fig. 5 is an enlarged view of the circled portion in Fig. 4;
Fig. 6 is another embodiment of the engaging member in the installation of the rim of the present invention, and
Fig. 7 is an enlarged view of the circled portion in Fig. 6.

### DETAILED DESCRIPTION OF THE PREFERRED EMBODIMENT

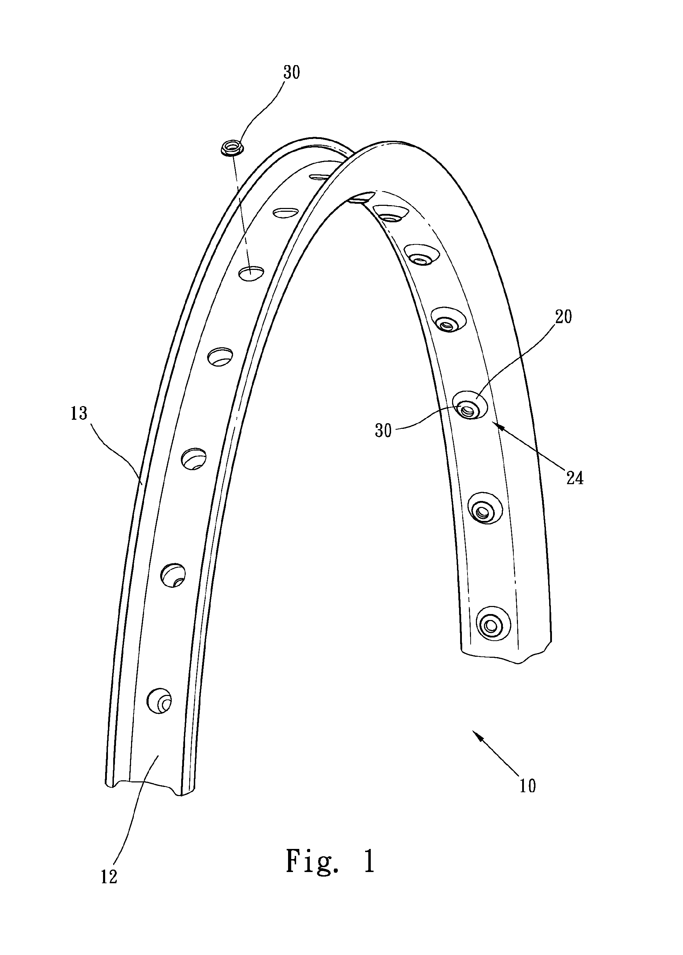

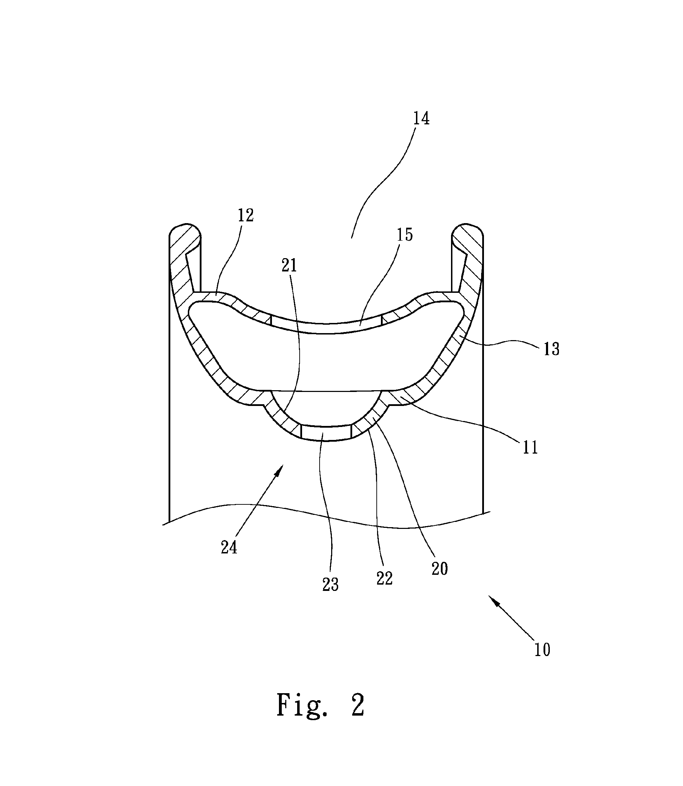

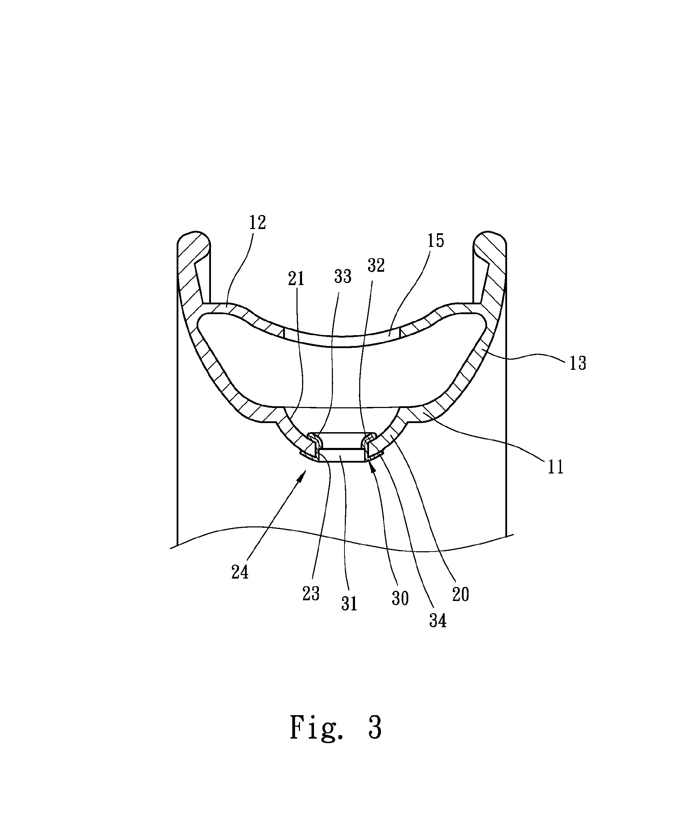

Referring to Figs. 1 to 5, the rim 10 of the present invention is an elongate member whose two ends are connected to each other to form the rim with pre-set thickness. The cross sectional view of the rim is an inverted A shape and comprises a first connection bridge 11, a second connection bridge 12 and two walls 13 connected to two sides of the first and second connection bridges 11, 12. The first connection bridge 11 is located closer than the second connection bridge 12 to the center of the rim 10. An engaging portion 14 is defined between the two walls 13 on the second connection bridge 12 so that a tire is engaged with the engaging portion 14. Multiple through holes 15 are defined through the second connection bridge 12.

Multiple seats 20 are defined in the first connection bridge 11 and located corresponding to the through holes 15 in the second connection bridge 12. Each seat 20 has a recess 21 facing the second connection bridge 12 and a protrusion 22 is located in opposite to the second connection bridge 12. An installation hole 23 is defined through each of the seats 20. In this embodiment, the installation hole 23 is located at the center of the seat 20.

Multiple engaging members 30 each have a passage 31 and, in this embodiment, the engaging member 30 is a rivet. Each installation hole 23 has one engaging member 30 engaged therewith so that a connection zone 24 is defined between the seat 20 and the installation hole 23, and the head 41 of a spoke 40 is connected to the engaging member 30. Each of the engaging members 30 is matched with the recess 21 and forms a contact portion 32. A contact surface 33 is defined in each of the engaging members 30 and matched with a neck portion 42 of the head 41 of the spoke 40. In detail, each of the engaging members has the contact portion 32 which is matched with the recess 21 corresponding thereto, and the contact portion 32 comprises contact surface 33 on an inner surface thereof and a match portion 34 on the outer surface thereof. The curvature of the contact surface 33 is matched with the neck portion 42 of the head 41 of the spoke 40 to increase the contact area therebetween. By the connection, the stress is dispensed to the engaging member 30 and the head 41 of the spoke 40 does not directly contact the rim 10 such that the connection zone 24 is indirectly reinforced.

The first connection bridge 11 has recessed seats 20 and each seat 20 has an installation hole 23 in which an engaging member 30 is engaged. The head 41 of the spoke 40 is engaged with the engaging member to reinforce the strength of the installation hole 23 and the connection zone 24. The engaging member 30 has the contact surface 33 which is matched with the recess 21 of the seat 20 so that the head 41 of the spoke 40 is securely connected to the rim 10. The engaging members 30 reduce the stress transferred to the rim 10.

The rim 10 has multiple through holes 15 in the second connection bridge 12 and the first connection bridge 11 has seats 20 located corresponding to the through holes 15, and each seat 20 h as an installation hole 23. The engaging members 30 are respectively riveted to the installation holes 23. The head 41 of the spoke 40 is connected to the passage 31 of the engaging member 30 so that the stress is spread to the engaging member 30 and the stress transferred to the installation hole 23 is reduced. The heads 41 of the spokes 40 are not directly connected to the rim 10 so that the stress transferred to the rim 1o is reduced and the connection zone 24 is reinforced. Therefore, the stress applied to the spokes 40 does not deform the rim 10. Furthermore, each of the engaging members 30 includes a contact surface 33 in the passage 31 which is matched with the neck portion 42 of the head 42 of the spoke 40 so that the contact area reduces the stress to be transferred to the rim 10 to prevent cracks at the periphery of the installation hole 23. By the connection of the seat 20 and the engaging member 30, the installation hole 23 is reinforced.

The rim 10 does not need to be too thick because the engaging members 30 reinforce the strength of the installation holes 23 so that the rim 10 is light.

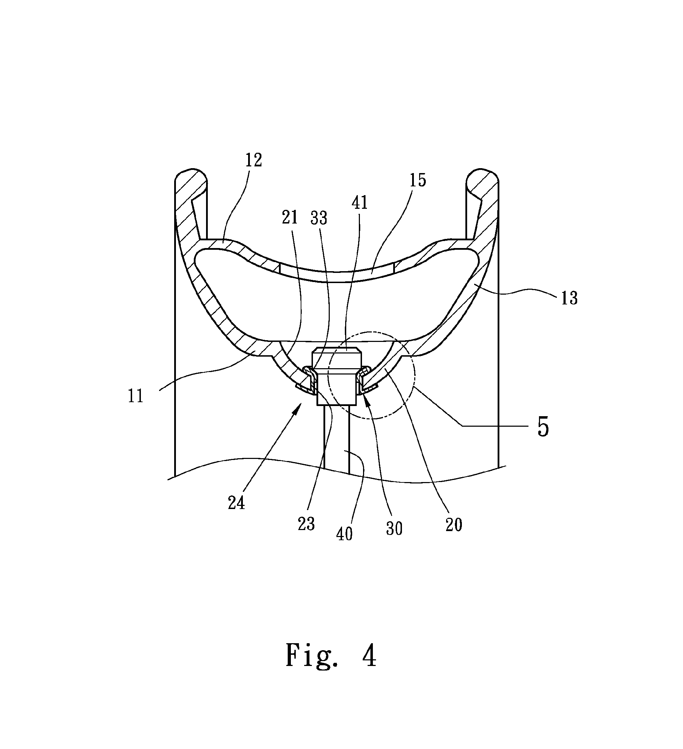

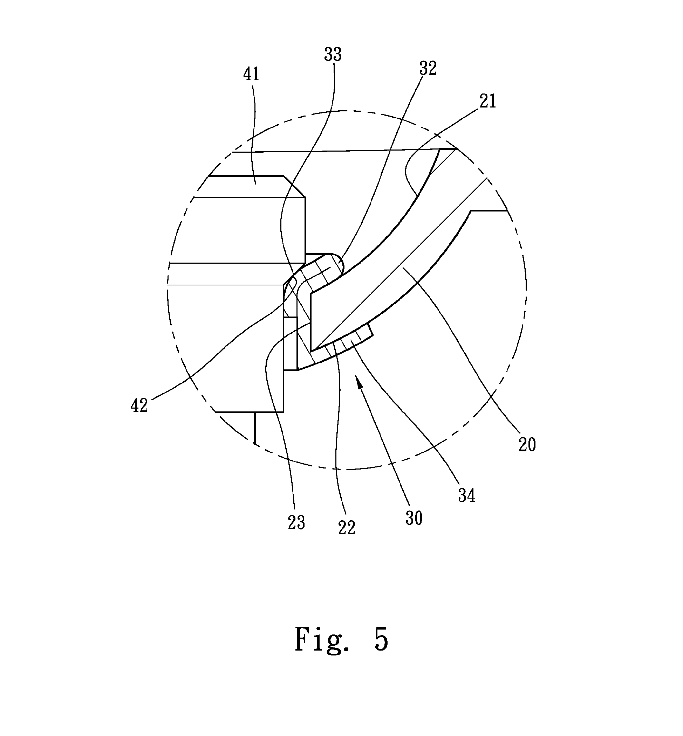

As shown in Figs. 4 and 5, the contact portion 32 is folded inward from an end of each of the engaging members 30 and the contact surface 33 is located at the outer surface of the contact portion 32. By the folded contact portion 32, the strength of the engaging member 30 is reinforced.

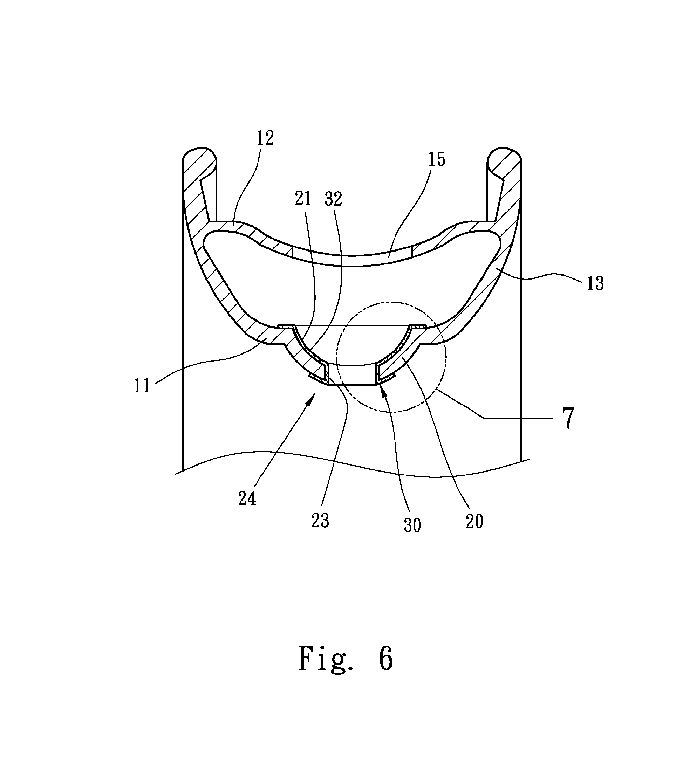

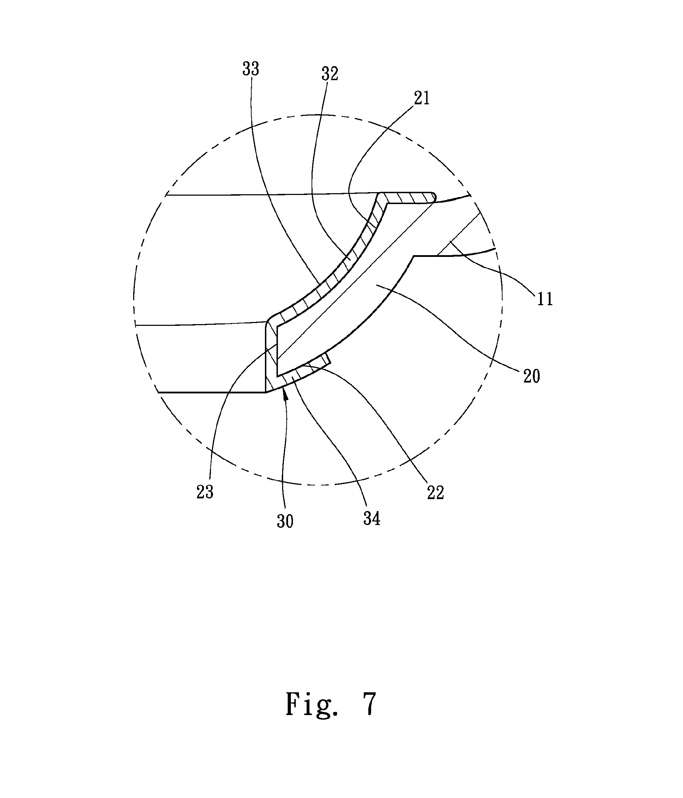

As shown in Figs. 6 and 7, the contact portion 32 can also be a single layer and the contact portion 32 extends along the recess 21. The top periphery of the contact portion 32 extends radially and is rested on the first connection bridge 11. By this arrangement, the strength of the recess 21 is reinforced.

While we have shown and described the embodiment in accordance with the present invention, it should be clear to those skilled in the art that further embodiments may be made without departing from the scope of the present invention.

## Claims

1. A rim comprising:
a first connection bridge and a second connection bridge, two walls connected to two sides of the first and second connection bridges, the first connection bridge located closer than the second connection bridge to a center of the rim, multiple through holes defined through the second connection bridge;
multiple seats defined in the first connection bridge and located corresponding to the through holes in the second connection bridge, each seat having a recess facing the second connection bridge and a protrusion located in opposite to the second connection bridge, an installation hole defined through each of the seats, and
multiple engaging members each having a passage and each installation hole having one engaging member engaged therewith, each of the engaging members being matched with the recess, a contact surface defined in each of the engaging members and matched with a neck portion of a head of a spoke.

2. The rim as claimed in claim 1, wherein each of the engaging members has a contact portion which is matched with the recess corresponding thereto, the contact portion comprises contact surface on an inner surface thereof and a match portion on the outer surface thereof.

3. The rim as claimed in claim 1, wherein each of the engaging members is a rivet.

4. The rim as claimed in claim 2, wherein the contact portion is folded inward from an end of each of the engaging members and the contact surface is located at a surface of the contact portion.

5. The rim as claimed in claim 2, wherein the contact portion is a single layer.

6. The rim as claimed in claim 2, wherein the contact portion is a single layer and extends along the recess, a top periphery of the contact portion extends radially and is rested on the first connection bridge.
